# EUROPÄISCHE PATENTSCHRIFT

(11) **EP 3 290 174 B1**
(45) Veröffentlichungstag und Bekanntmachung des Hinweises auf die Patenterteilung: **22.05.2019**
(21) Anmeldenummer: 16186925.0
(22) Anmeldetag: 02.09.2016
(51) Int. Cl.: B27N 7/00, B27N 3/14, B29C 35/08, B27N 3/00

(54) **VERFAHREN ZUR HERSTELLUNG EINER MIT EINER STRUKTURIERTEN OBERFLÄCHE VERSEHENEN OSB**
METHOD FOR PRODUCING AN OSB WITH A STRUCTURED SURFACE
PROCEDE DE FABRICATION D'UN PANNEAU A PARTICULES ORIENTEES POURVU D'UNE SURFACE STRUCTUREE

(43) Veröffentlichungstag der Anmeldung: 07.03.2018
(73) Patentinhaber: SWISS KRONO Tec AG, 6004 Luzern (CH)
(72) Erfinder: KALWA, Norbert, 32805 Horn-Bad Meinberg (DE)
(74) Vertreter: Maikowski & Ninnemann Patentanwälte Partnerschaft mbB

(56) Entgegenhaltungen:
- WO-A1-01/62492
- DE-A1- 19 543 901
- DE-A1- 19 630 270
- DE-A1-102014 010 747
- US-A- 4 490 409
- US-A1- 2002 155 279

## Beschreibung

Die vorliegende Erfindung betrifft ein Verfahren zur Herstellung einer mit einer strukturierten Oberfläche versehenen OSB gemäß Anspruch 1.

### Beschreibung

Durch die verstärkte Verwendung von Holzprodukten im Hausbau, entwickeln sich auch für Holzwerkstoffe mehr und mehr Anwendungen, die zuvor als eher schwierig eingestuft wurden. Dies betrifft insbesondere Anwendungen von Holzprodukten im Fassadenbereich. Während Compactplatten bereits seit vielen Jahren im Fassadenbereich genutzt werden, ist dies für andere Holzwerkstoffe her selten. Die wichtigsten Gründe hierfür sind mangelnde Festigkeit und Quellung. Dies ist insbesondere für den Holzwerkstoff OSB (oriented strand board) bedauerlich, da er wegen seiner guten mechanischen Eigenschaften heute im Innenaus- und Fertighausbau für eine Vielzahl von konstruktiven Anwendungen eingesetzt wird.

Die ursprünglich als Abfallprodukte der Furnier-und Sperrholzindustrie anfallenden OSB werden zunehmend im Holz- und Fertighausbau eingesetzt, da OSB leicht sind (Rohdichte von ca. 550 kg/cm³) und trotzdem, die an Bauplatten gesetzten statischen Anforderungen erfüllen. So werden OSB als Bauplatten, zur Wand- oder Dachbeplankung oder auch im Fußbodenbereich eingesetzt.

Die Herstellung der OSB erfolgt in einem mehrstufigen Prozess, wobei zunächst lange, flächige Späne (Strands) aus entrindetem Rundholz, insbesondere Nadelholz, in Längsrichtung durch rotierende Messer abgeschält werden. Die Strands haben typischerweise eine Länge zwischen 50-200 mm, eine Breite zwischen 5-20 mm und eine Dicke zwischen 0,1 und 1 mm.

Die Strands werden im Anschluss an die Trocknung in eine Beleimvorrichtung eingeführt, in welcher Leim bzw. Klebstoff fein verteilt auf die Späne aufgebracht werden. Zur Verleimung werden überwiegend PMDI (Polymeres Diphenylmethandiisocyanat) oder MUPF-Leime (Melamin-Harnstoff-Phenol-Formaldehyd) eingesetzt.

Nach der Beleimung werden die beleimten Strands in Streuapparaturen alternierend längs und quer zur Produktionsrichtung gestreut, sodass die Strands kreuzweise in mindestens 3 Schichten angeordnet sind (untere Deckschicht-Mittelschicht-obere Deckschicht). Die Streurichtung der Strands ist von einer Schicht zur nächsten Schicht um 90° gedreht. Hieraus resultiert auch die hohe Biegefestigkeit von OSB-Werkstoffplatten, die für viele Anwendungen wichtig ist.

Die Geometrie und Streuung der Strands führt jedoch bei den OSB meist nicht zu einer geschlossenen Oberfläche, sondern zu einer Struktur mit Vertiefungen, die bis zu mehrere Millimeter tief sein können. Diese Vertiefungen bzw. Löcher beschleunigen ein Eindringen von Wasser in tiefere Bereiche der OSB bei Regen oder bei anderen Beanspruchungen, bei denen Wasser anwesend ist. Dies kann zu unerwünschten Quellungen mit einer Verschlechterung der Festigkeitswerte führen und zum Beispiel nach einem Regenereignis eine Gewichtszunahme aufgrund der zusätzlichen Wasseraufnahme verursachen. Auch können die OSB schnell verschmutzen bzw. Chemikalien in die Oberfläche der Platte eindringen, was eine Leimhydrolyse oder Farbveränderungen verursachen kann.

In einigen Ländern werden allerdings bereits Holzwerkstoffe für die Fassade verwendet. Es sind dann häufig Faserplatten, die oft noch nach dem Nassverfahren hergestellt werden. Dabei werden als Leime Phenolharze eingesetzt, die in Kombination mit einer hohen Rohdichte des Produktes eine niedrige Quellung liefern. Zusätzlich muss der meist mit einer relativ starken Oberflächenstrukturierung versehene Holzwerkstoff, gegen das Eindringen von Wasser geschützt werden. Dies erfolgt durch die Verwendung von aussenbewitterungstauglichen Lacken, die im Giessverfahren auf die strukturierte Platte aufgebracht werden. Die so hergestellten kleinformatigen Paneele (3,66 x 0,3 m) werden häufig auf eine Holzunterkonstruktion aufgenagelt. Die oben angesprochene hohe Rohdichte führt natürlich bei der Strukturierung zu einem erhöhten Aufwand. Zudem führt eine Trägerplatte mit hoher Rohdichte bei großformatigeren Platten zu Handlingsproblemen bei der Montage. Auch ist bekannt, dass Faserplatten, die nach dem Nassverfahren hergestellt worden sind und Phenolharz als Bindemittel enthalten, zu Verzügen neigen, wenn sich die klimatischen Bedingungen ändern. Aus diesem Grund werden diese Platten meist nur in geringen Stärken eingesetzt und/oder nur kleine Formate verwendet.

Diese bekannten oder möglichen Alternativen besitzen also mehr oder weniger große Schwächen: hohes Investitionsrisiko, hohe Kosten, Produktnachteile und Nachteile in Verfahrenstechnologie.

Ein Hauptproblem für die Verwendung von OSB im Außenbereich sind die oben beschriebenen Löcher in der Oberfläche, die eine direkte Lackierung technisch und kostenmäßig in einem vertretbaren Aufwand unmöglich machen. Zusätzlich können die Strands wegen ihrer Brüchigkeit nicht in einer Presse strukturiert werden. Dies würde bedeuten, dass man in den Oberflächenausführungen relativ stark limitiert wäre.

Die Druckschrift WO 01/62492 offenbart ein Verfahren gemäß dem Oberbegriff des Anspruchs 1.

Der vorliegenden Erfindung liegt daher die technische Aufgabe zugrunde, ein Verfahren bereitzustellen, welches bei geringen Zusatzkosten eine OSB erzeugt, die eine Oberfläche besitzt, die eine Kombination aus lackierbarer/abgiessbarer und gleichzeitig strukturierbarer Deckschicht ist. Diese Oberfläche soll gleichzeitig eine Feuchtigkeitssperre darstellen, die das Eindringen von Wasser unterbindet.

Diese Aufgabe wird erfindungsgemäß durch ein Verfahren zur Herstellung einer mit einer strukturierten Oberfläche versehenen OSB mit den Merkmalen des Anspruchs 1 gelöst.

Entsprechend wird ein Verfahren zur Herstellung einer mit einer strukturierten Oberfläche versehenen OSB bereitgestellt, welche die folgenden Schritte umfasst:
a) Bereitstellen von mindestens einer OSB,
b) Aufbringen von mindestens einer Schicht aus mindestens einem Kunststoffharz auf mindestens eine Oberfläche der OSB;
   wobei das mindestens eine Kunststoffharz ein Schmelzklebstoff (Hotmelt) ist, der mit einer Temperatur aufgetragen wird, die um 10 bis 50°C über der üblichen Schmelztemperatur des verwendeten Schmelzklebstoffes liegt;
c) Strukturierung der mit dem mindestens einen Schmelzklebstoff beschichteten Oberfläche der OSB.

In dem vorliegenden Verfahren wird demnach mindestens eine Schmelzklebstoffschicht aus Schmelzklebstoff aufgetragen, wobei die Schmelzklebstoffschicht eine Verfüllung der Oberfläche (Auffüllen der Vertiefungen) der OSB bewirkt. Der Auftrag des Kunststoffharzes in Form eines Schmelzklebstoffes bzw. Hotmelts kann mit einer glatten Walze im Gleichlauf erfolgen. Hierdurch kann sich vor der Walze auf der OSB eine Wulst bilden, die in der Lage ist, die Vertiefungen auf der OSB-Oberfläche aufzufüllen.

Die erfindungsgemäß verwendeten Schmelzklebstoffe sind typischerweise lösungsmittelfreie und bei Raumtemperatur meist feste Produkte, die im geschmolzenen Zustand auf eine Klebefläche aufgetragen werden und beim Abkühlung die Ausbildung einer festen Verbindung bewirken. Die Verklebungseigenschaften werden demnach durch die Verfestigung aufgrund Abkühlung und nicht durch ein Aushärten verbunden mit einer chemischen Vernetzungsreaktion bewirkt. Typische Anwendungsgebiete sind z.B. die Beschichtung von Kanten, Flächenverklebungen, als Haft-Schmelzklebstoff auf Briefumschlägen oder der Einsatz als Ummantelungsklebstoff. Die Verwendung von Schmelzklebstoffen als Oberflächenbeschichtung von OSB ist bisher nicht bekannt.

In einer Ausführungsform des vorliegenden Verfahrens ist der mindestens eine Schmelzklebstoff ausgewählt ist aus einer Gruppe enthaltend Polyurethan, z.B. thermoplastische Polyurethane, Polyamid, Ethylenvinylacetat, Polyester oder Polyolefin. Die Materialauswahl erfolgt dabei in Hinblick auf den vorgesehenen Einsatzbereich und den sich daraus ergebenden Beanspruchungen bezüglich Temperatur, Chemikalien, Wasser usw. Im Falle der Verwendung von EVA, Polyamid oder Polyolefin erfolgt die Verfestigung der Harzschichten bevorzugt mittels Abkühlung. Polyurethan und Polyolefin sind wegen ihrer höheren Wärmestandfestigkeit (> 100 °C) bevorzugt. Der Einsatz von Polyurethan hat noch den weiteren Vorteil, dass eine Nachvernetzung mit der Holzoberfläche erfolgt, wodurch eine besonders gute Haftung auf der Strandoberfläche bewirkt wird.

Wie oben angeführt wird der zum Einsatz kommende Schmelzklebstoff erfindungsgemäß bei einer Temperatur aufgetragen, die oberhalb der vom Hersteller empfohlenen Applikationstemperatur (die in etwa der Schmelztemperatur des Klebstoffes entspricht) liegt. Aufgrund der erhöhten Temperatur des Schmelzklebstoffes reduziert sich die Viskosität des Schmelzklebstoffes und ermöglicht ein verbessertes Eindringen des Schmelzklebstoffes in die Holzstruktur. Gleichzeitig wird eine Imprägnierung der Holzstrands auf der OSB-Oberfläche bewirkt.

Der Schmelzklebstoff wird erfindungsgemäß mit einer Temperatur aufgetragen, die um 10 bis 50°C, bevorzugt um 25 bis 45 °C über der üblichen Verarbeitungstemperatur bzw. Applikationstemperatur des Schmelzklebstoffes liegt.

Die vom Hersteller empfohlene Applikationstemperaturen der Schmelzklebstoffe variieren in Abhängigkeit von der chemischen Zusammensetzung der Schmelzklebstoffe. So liegen typische Applikationstemperaturen von Polyamiden oberhalb 200°C, von Polyethylen zwischen 140 und 200°C, oder von EVA bei ca. 150°C.

Wird nun eine Polyurethan-Hotmeltvariante mit einem üblichen Verarbeitungsfenster zwischen 130 und 150°C verwendet, wird diese bevorzugt mit einer Temperatur von 170-180°C (z.B. 175°C) aufgetragen. Im Falle einer weiteren Polyurethan-Zubereitung mit einem üblichen Verarbeitungsfenster zwischen 170 und 200°C erfolgt der Auftrag bevorzugt mit einer Temperatur von 210-220°C (z.B. 210°C).

Entsprechend wird in einer bevorzugten Ausführungsform des vorliegenden Verfahrens die mindestens eine Schmelzklebstoffschicht mit einer Temperatur zwischen 150 und 250°C, bevorzugt zwischen 170 und 210°C, insbesondere bevorzugt zwischen 180 und 200°C aufgetragen.

Die Viskosität des aufzutragenden Schmelzklebstoffes kann je nach Schmelzklebstoff in einem Bereich zwischen 5500 und 6200 mPas (Brookfield) für einen Polyurethan-Hotmelt oder in einem Bereich zwischen 13000 und 15000 mPas liegen.

Wie bereits erwähnt ermöglicht die Verwendung bzw. das Auftragen eines Schmelzklebstoffes mit einer erhöhten Temperatur (und reduzierter Viskosität) auch eine Imprägnierung der Strands, die nicht nur zu einer Hydrophobierung des Holzes führt sondern auch die Bildung eines Holz-Kunststoff-Laminates zur Folge hat. Dies ist dadurch bedingt, dass die Strands nach dem Trocknen eine sehr große Oberfläche besitzen und im Holz selber auch viele Hohlräume vorhanden sind, die sich mit dem heißen Schmelzklebstoff füllen lassen.

Zudem erlaubt das vorliegende Verfahren die Verformung der mit dem Schmelzklebstoff beschichteten OSB Oberfläche in einer Takt- oder Durchlaufpresse mit einem strukturierten Blech oder einer strukturierten Walze. Dabei können Strukturen mit mehreren hundert Mikrometern Strukturtiefe problemlos hergestellt werden. Die Strands haben aufgrund der Imprägnierung mit dem heißem Schmelzklebstoff ihre Tendenz zum splitternden Bruch und zum Zurückfedern verloren.

Überraschenderweise wird die Verfüllung der Löcher und die Imprägnierung der Strands mit sehr geringen Auftragsmengen Hotmelt pro Quadratmeter erreicht. Dadurch wird dieses Verfahren auch unter Kostenaspekten interessant. Zudem wird auch durch die geringe Auftragsmenge eine hohe Produktivität erreicht. Diese ist üblicherweise stark von der Aufschmelzkapazität für den Hotmelt der Produktionslinie abhängig. Aufschmelzkapazitäten von mehr als 150 kg Hotmelt/h werden nur mit technisch aufwändigen Anlagen erreicht. Diese sind dann aber auch sehr teuer.

So kann die Schmelzklebstoffschicht in einer Menge zwischen 50 und 150 g/m², bevorzugt zwischen 70 und 120 g/m², insbesondere bevorzugt zwischen 80 und 100 g/m² aufgetragen werden. Wie bereits oben erwähnt dient die Schmelzklebstoffschicht der Verfüllung der Oberfläche und entsprechend hängt die Menge der aufzutragenden ersten Schmelzklebstoffschicht von der Anzahl und Tiefe der auf der OSB-Oberfläche auftretenden Vertiefungen ab. Je unebener und offener die Oberfläche, desto mehr Schmelzklebstoff muss entsprechend aufgetragen werden.

In Abhängigkeit von der Auftragsmenge des Schmelzklebstoffes können sich Schichtdicken zwischen 50 und 150 µm, bevorzugt von 100 µm auf der OSB Oberfläche ergeben.

Der Auftrag und die Strukturierung können auf großformatigen OSB oder auch mit bereits vorkonfektionierten Elementen (Nut-und Federplatte) erfolgen.

Das vorliegende Verfahren zur Bereitstellung einer strukturierten Oberflächenbeschichtung einer OSB, ist mit geringen Zusatzkosten, niedrigen Investitionskosten, einer einfachen Nachrüstung mit wenig Platzbedarf und einer hohen Verfahrensflexibilität im Vergleich zu den bekannten Verfahren verbunden.

In einer bevorzugten Ausführungsform des vorliegenden Strukturierungsverfahrens wird die Schmelzklebstoffschicht mit einem Auftragswerkzeug mit einer glatten Oberfläche, insbesondere mit einer Walze mit einer glatten Oberfläche, aufgetragen.

Der Strukturierungsschritt der mit der Schmelzklebstoffschicht versehenen OSB-Oberfläche erfolgt bevorzugt in einer Presse (bzw. Kalander) mit einem strukturierten Blech oder einer strukturierten Walze. Es können dabei Strukturtiefen (in Abhängigkeit von der Menge des aufgetragenen Schmelzklebstoffes) von 50 bis 500 µm, bevorzugt 100 bis 350 µm, insbesondere bevorzugt 100 bis 200 µm eingebracht werden. Die einzubringenden Strukturtiefen entsprechen z.B. einer groben Holzmaserung. Wichtig ist bei der Strukturierung, dass möglichst wenig Strands beschädigt oder zerstört werden, da sich dadurch ansonsten die mechanischen Eigenschaften der OSB verschlechtern. Auch besteht die Gefahr, dass die Beschädigungen in den Strands zu Rissen führen, die auch nach nachträglicher Lackierung das Eindringen von Wasser ermöglichen. Die Prüfung des Ausmaßes der Strandbeschädigung/-zerstörung kann durch visuelle Untersuchung mit Hilfe eines Mikroskops erfolgen.

In einer weiteren Ausführungsform des vorliegenden Verfahrens wird mindestens eine Primerschicht auf die strukturierte Oberfläche aufgetragen. Der Auftrag des Primers auf die strukturierte Oberfläche erfolgt z.B. nach Reinigung der Oberfläche mittels einer Bürste oder ähnlichem. Die Menge des aufgetragenen flüssigen Primers beträgt vorliegend zwischen 1 und 30 g/m², bevorzugt zwischen 5 und 20 g/m², insbesondere bevorzugt zwischen 10 und 15 g/m².

In einer anderen Variante des vorliegenden Verfahrens wird mindestens eine erste Lackschicht, bevorzugt auf die Primerschicht, aufgetragen. Zur Ausbildung der mindestens einen ersten Lackschicht kann der flüssige Lack in einer Menge zwischen 50 und 200 g/m², bevorzugt zwischen 80 und 150 g/m², bevorzugt zwischen 100 und 130 g/m² z.B. in einer Lackierstrasse aufgebracht werden.

Als Lacke werden bevorzugt Verbindungen auf Basis von Isocyanatacrylaten verwendet, wobei bezüglich der Isocyanatkomponente nicht-aromatische, aliphatische Isocyanate, wie Hexamethylendiisocyanat, Isophorondiisocyanat, oder Präpolymere, die diese Isocyanate enthalten besonders bevorzugt sind.

Die mindestens eine erste Lackschicht kann mit Pigmenten, bevorzugt mit weißen Pigmenten, versetzt sein. Als Farbpigmente können weiße Pigmente wie Titandioxid (TiO₂) verwendet werden. Weitere Farbpigmente können Calciumcarbonat, Bariumsulfat oder Bariumcarbonat sein.

Die mindesten eine erste Lackschicht, bevorzugt weißpigmentierte erste Lackschicht, wird nach Auftrag bevorzugterweise z.B. unter Verwendung eines Elektronenstrahlers angehärtet.

In einer weiteren Variante des vorliegenden Verfahrens ist es ebenfalls möglich, auf die erste Lackschicht mindestens eine zweite Lackschicht aufzutragen. Als zweite Lackschicht kann ebenfalls ein Lack auf Basis von Isocyanatacrylaten, insbesondere in Bezug der IsocyanatKomponente auf der Basis von nicht-aromatischen, aliphatischen Isocyanaten, wie Hexamethylendiisocyanat, Isophorondiisocyanat, oder entsprechenden Präpolymeren verwendet werden, wobei diese zweite Lackschicht bevorzugt pigmentfrei ist, d.h. als Klarlack verwendet wird.

Die mindestens eine zweite Lackschicht kann in einer Menge zwischen 50 und 150 g/m², bevorzugt zwischen 80 und 120 g/m², bevorzugt zwischen 100 und 110 g/m² aufgebracht werden.

Die mindestens eine erste und/oder mindestens eine zweite Lackschicht werden in einem abschließenden Schritt unter Verwendung eines Elektronenstrahlers endgehärtet bzw. vollständig ausgehärtet.

Das vorliegende Verfahren ermöglicht somit die Bereitstellung einer oberflächenbeschichteten und oberflächenstrukturierten OSB. Die strukturierte Oberflächenbeschichtung der vorliegenden OSB umfasst mit Strukturtiefen bis zu 500 µm, bevorzugt bis zu 350 µm.

Die Strukturtiefen können in einem Bereich zwischen 50 bis 500 µm, bevorzugt 100 bis 350 µm, insbesondere bevorzugt 100 bis 200 µm liegen und werden je nach gewünschter Maserung bzw. Struktur ausgewählt. So kann in einer Ausführungsform die OSB mit einer groben Holzmaserung mit einer Strukturtiefe von ca. 100 bis 350 µm bereitgestellt werden.

In einer bevorzugten Ausführungsform sind auf der vorliegenden oberflächenstrukturierten OSB mindestens eine Primerschicht, mindestens eine erste Lackschicht und bevorzugt mindestens eine zweite Lackschicht vorgesehen sind. Insbesondere durch den Auftrag der Lackschichten werden oberflächenstrukturierte OSB bereitgestellt, die eine hohe UV-Stabilität und eine gute Beständigkeit gegenüber Witterungseinflüssen besitzen.

Die vorliegende oberflächenstrukturierte OSB kann somit im Außenbereich z.B. als Fassadenverkleidung oder auch als Wandverkleidung in Bereichen ohne direkte Bewitterung (Reithallen, Ställe usw.) eingesetzt werden.

Dabei kann die Schmalflächenversiegelung der einzelnen Elemente ebenfalls mit den oben beschriebenen Hotmelts durchgeführt werden. Dies kann nach der Herstellung der einzelnen Elemente vor dem Lackieren erfolgen.

Die Erfindung wird nachfolgend unter Bezugnahme auf die Figur der Zeichnung an einem Ausführungsbeispiel näher erläutert.

### Ausführungsbeispiel 1:

In einer ersten Variant a) wurde auf eine geschliffene 10 mm OSB mit einem Walzenauftragsgerät PU-Hotmelt (602.35, Fa. Jowat) aufgetragen. Der Auftrag erfolgte im Gleichlauf und lag bei ca. 100 g/m².

Die Temperatur des aufzutragenden Hotmelt betrug 140°C. (normales Verarbeitungsfenster des Hotmelt: 130 - 150°C); d.h. in dieser Variante wurde der Hotmelt mit der vom Hersteller vorgegebenen Applikationstemperatur aufgetragen

In einer zweiten Variante b) wurde eine weitere 10 mm OSB mit einem Hotmelt beschichtet, wobei die Temperatur des Hotmelt 175°C betrug; d.h. in dieser Variante lag die Temperatur 25-45°C über dem normalen Verarbeitungsfenster
Nachdem der Hotmelt abgekühlt war wurden die Platten mit dem Hotmelt durch einen Kalander mit einer strukturierten Walze gefahren. Zum Vergleich wurde eine OSB ohne Hotmeltbeschichtung mit gefahren.

Die Struktur war eine grobe Holzmaserung mit einer Tiefe bis zu 500 µm. Der Vorschub betrug 20 m/min. Die Temperatur im Vorlauf des Thermoöl beheizten Kalanders lag bei 180°C und der Druck bei 200 N/mm. Die Struktur des Kalanders übertrug sich auf die OSB.

Eine Begutachtung der Muster unter dem Mikroskop zeigte folgendes Ergebnis:

| Muster Prüfung | OSB ohne Hotmelt | OSB mit Hotmelt (140°C) Variante a | OSB mit Hotmelt (175°C) Variante b |
|---|---|---|---|
| Prüfung auf Strandbrüche (Mikroskop) | viele Strandbrüche (ca. 30%) | weniger Strandbrüche (ca. 10%) | Nur vereinzelte Strandbrüche (< 5%) |
| Lose Strands | Ja | wenige | keine |
| Strukturtiefe in µm | 200 | 250 | 350 |

Wie die Tabelle zeigt, wird lediglich bei der Variante b mit dem Hotmelt, der oberhalb des empfohlenen Temperaturfensters appliziert wurde, eine gut strukturierte Oberfläche ohne lose Strands und nahezu ohne Strandbrüche erzielt.

Die Platten wurden nach dem Abkühlen in einer Lackierstrasse mit einem weisspigmentierten Acrylatlack abgegossen (Auftragsmenge: 100 g/m2). Die Lackschicht wurde mit einem Elektronenstrahler angehärtet. Danach wurde ebenfalls mit einer Giessmaschine ein Klarlack auf Acrylatbasis (Auftragsmenge: 80g / m²) aufgebracht. Die beiden Lackschichten wurden mit einem ESH-Strahler endgehärtet. Der Vorschub der Anlage lag bei 25 m/min.

### Ausführungsbeispiel 2:

Auf eine geschliffene 10 mm OSB wird mit einem Walzenauftragsgerät PO-Hotmelt (60 287 90, Fa. Jowat) aufgetragen. Der Auftrag erfolgte im Gleichlauf und lag bei 100 g/m². Die Temperatur des Hotmelt betrug 210°C (normales Verarbeitungsfenster des Hotmelt: 170 - 200°C); d.h. die Auftragstemperatur des Hotmelt liegt 10-40°C oberhalb der empfohlenen Applikationstemperatur. Auch hier wurde wieder eine Oberfläche ohne lose Strands und nur mit vereinzelten Strandbrüchen erzielt.

Nachdem der Hotmelt abgekühlt war wurde die Platte mit dem Hotmelt durch einen Kalander mit einer strukturierten Walze gefahren. Die Struktur war eine grobe Holzmaserung mit einer Tiefe bis zu 500 µm. Der Vorschub betrug 20 m/min. Die Temperatur im Vorlauf des Thermoöl beheizten Kalanders lag bei 190°C und der Liniendruck bei 200 N/mm. Die Struktur des Kalanders übertrug sich auf die hotmeltbeschichtete OSB. Es wurden nach dem Abkühlen Strukturtiefen von bis zu 350 µm bestimmt.

Die Platten wurden nach dem Abkühlen in einer Lackierstrasse zunächst mit einem Primer behandelt (Auftragsmenge: 15 g flüssig/m²). Danach wird die Oberfläche mit einem weißpigmentierten Acrylatlack abgegossen (Auftragsmenge: 150 g/m²). Die Lackschicht wurde mit einem ESH-Strahler angehärtet.

## Patentansprüche

1. Verfahren zur Herstellung einer mit einer strukturierten Oberfläche versehenen OSB,
umfassend die Schritte
a) Bereitstellen von mindestens einer OSB,
b) Aufbringen von mindestens einer Schicht aus mindestens einem Kunststoffharz auf mindestens eine Oberfläche der OSB;
wobei das mindestens eine Kunststoffharz ein Schmelzklebstoff (Hotmelt) ist, der mit einer Temperatur aufgetragen wird, die um 10 bis 50°C, bevorzugt um 25 bis 45 °C über der üblichen Schmelztemperatur des verwendeten Schmelzklebstoffes liegt; und
c) Strukturierung der mit dem mindestens einen Schmelzklebstoff beschichteten Oberfläche der OSB.

2. Verfahren nach Anspruch 1, **dadurch gekennzeichnet, dass** der mindestens eine Schmelzklebstoff ausgewählt ist aus einer Gruppe enthaltend Polyurethan, Polyamid, Ethylenvinylacetat, Polyester und Polyolefin.

3. Verfahren nach einem der vorhergehenden Ansprüche, **dadurch gekennzeichnet, dass** die Schmelzklebstoffschicht mit einem Auftragswerkzeug mit einer glatten Oberfläche, insbesondere mit einer Walze mit einer glatten Oberfläche, aufgetragen wird.

4. Verfahren nach einem der vorhergehenden Ansprüche, **dadurch gekennzeichnet, dass** die Schmelzklebstoffschicht in einer Menge zwischen 50 und 150 g/m², bevorzugt zwischen 70 und 120 g/m², insbesondere bevorzugt zwischen 80 und 100 g/m² aufgetragen wird.

5. Verfahren nach einem der vorhergehenden Ansprüche, **dadurch gekennzeichnet, dass** die mindestens eine Schmelzklebstoffschicht mit einer Temperatur zwischen 150 und 250°C, bevorzugt zwischen 170 und 210°C, insbesondere bevorzugt zwischen 180 und 200°C aufgetragen wird.

6. Verfahren nach einem der vorhergehenden Ansprüche, **dadurch gekennzeichnet, dass** die Strukturierung der OSB-Oberfläche in einer Presse mit einem strukturierten Blech oder einer strukturierten Walze erfolgt.

7. Verfahren nach einem der vorhergehenden Ansprüche, **dadurch gekennzeichnet, dass** mindestens eine Primerschicht auf die strukturierte Oberfläche aufgetragen wird.

8. Verfahren nach einem der vorhergehenden Ansprüche, **dadurch gekennzeichnet, dass** mindestens eine erste Lackschicht, bevorzugt auf die Primerschicht, aufgetragen wird.

9. Verfahren nach Anspruch 8, **dadurch gekennzeichnet, dass** die mindestens eine erste Lackschicht in einer Menge zwischen 50 und 200 g/m², bevorzugt zwischen 80 und 150 g/m², bevorzugt zwischen 100 und 130 g/m² aufgebracht wird.

10. Verfahren nach einem der vorhergehenden Ansprüche, **dadurch gekennzeichnet, dass** mindestens eine zweite Lackschicht aufgetragen wird.

11. Verfahren nach Anspruch 10, **dadurch gekennzeichnet, dass** die mindesten eine zweite Lackschicht in einer Menge zwischen 50 und 150 g/m², bevorzugt zwischen 80 und 120 g/m², bevorzugt zwischen 100 und 110 g/m² aufgebracht wird.

12. Verfahren nach einem der Ansprüche 8-11, **dadurch gekennzeichnet, dass** die mindestens eine erste und/oder mindestens eine zweite Lackschicht unter Verwendung eines Elektronenstrahlers endgehärtet werden.

## Claims

1. A method for producing an OSB having a structured surface,
comprising the steps
a) providing at least one OSB,
b) Application of at least one layer of at least one plastic resin to at least one surface of the OSB;
wherein said at least one plastic resin is a hot-melt adhesive
c) structuring the surface of the OSB coated with the at least one hot-melt adhesive.
**characterized in that**
the hot melt adhesive is applied at a temperature 10 to 50°C, preferably 25 to 45°C, above the usual melting temperature of the hot melt adhesive used.

2. Method according to claim 1, **characterized in that** the at least one hot-melt adhesive is selected from a group comprising polyurethane, polyamide, ethylene vinyl acetate, polyester and polyolefin.

3. Method according to one of the preceding claims, **characterized in that** the hot-melt adhesive layer is applied with an application tool having a smooth surface, in particular with a roller having a smooth surface.

4. Method according to one of the preceding claims, **characterized in that** the hot-melt adhesive layer is applied in an amount between 50 and 150 g/m², preferably between 70 and 120 g/m², in particular preferably between 80 and 100 g/m².

5. Method according to one of the preceding claims, **characterized in that** the at least one hot-melt adhesive layer is applied at a temperature between 150 and 250°C, preferably between 170 and 210°C, in particular preferably between 180 and 200°C.

6. Method according to one of the preceding claims, **characterized in that** the structuring of the OSB surface is carried out in a press with a structured sheet metal or a structured roll.

7. Method according to one of the preceding claims, **characterized in that** at least one primer layer is applied to the structured surface.

8. Method according to one of the preceding claims, **characterized in that** at least a first lacquer layer is applied, preferably to the primer layer.

9. Method according to claim 8, **characterized in that** the at least one first lacquer layer is applied in an amount between 50 and 200 g/m², preferably between 80 and 150 g/m², preferably between 100 and 130 g/m².

10. Method according to one of the preceding claims, **characterized in that** at least one second lacquer layer is applied.

11. Method according to claim 10, **characterized in that** the at least one second lacquer layer is applied in an amount between 50 and 150 g/m², preferably between 80 and 120 g/m², preferably between 100 and 110 g/m².

12. Method according to one of claims 8-11, **characterized in that** the at least one first and/or at least one second lacquer layer is finally hardened using an electron beam.

## Revendications

1. Procédé de fabrication d'un panneau à particules orientées pourvu d'une surface structurée, comprenant les étapes de
a) fourniture d'au moins un panneau à particules orientées,
b) application d'au moins une couche d'au moins une résine synthétique sur au moins une surface du panneau à particules orientées ;
dans lequel l'au moins une résine synthétique est un adhésif thermofusible, et
c) structuration de la surface du panneau à particules orientées revêtue de l'au moins un adhésif thermofusible ;
**caractérisé en ce que** l'adhésif thermofusible est appliqué à une température de 10 à 50 °C, de manière préférée de 25 à 45 °C au-dessus de la température de fusion habituelle de l'adhésif thermofusible utilisé.

2. Procédé selon la revendication 1, **caractérisé en ce que** l'au moins un adhésif thermofusible est sélectionné dans un groupe contenant du polyuréthane, du polyamide, de l'éthylène-acétate de vinyle, du polyester et de la polyoléfine.

3. Procédé selon l'une quelconque des revendications précédentes, **caractérisé en ce que** la couche d'adhésif thermofusible est appliquée avec un outil d'application avec une surface lisse, en particulier avec un rouleau avec une surface lisse.

4. Procédé selon l'une quelconque des revendications précédentes, **caractérisé en ce que** la couche d'adhésif thermofusible est appliquée en une quantité entre 50 et 150 g/m², de manière préférée entre 70 et 120 g/m², de manière particulièrement préférée entre 80 et 100 g/m².

5. Procédé selon l'une quelconque des revendications précédentes, **caractérisé en ce que** l'au moins une couche d'adhésif thermofusible est appliquée à une température entre 150 et 250 °C, de manière préférée entre 170 et 210 °C, de manière particulièrement préférée entre 180 et 200 °C.

6. Procédé selon l'une quelconque des revendications précédentes, **caractérisé en ce que** la structuration de la surface du panneau à particules orientées a lieu dans une presse avec une tôle structurée ou un rouleau structuré.

7. Procédé selon l'une quelconque des revendications précédentes, **caractérisé en ce qu'**au moins une couche primaire est appliquée sur la surface structurée.

8. Procédé selon l'une quelconque des revendications précédentes, **caractérisé en ce qu'**au moins une première couche de vernis est appliquée, de manière préférée sur la couche primaire.

9. Procédé selon la revendication 8, **caractérisé en ce que** l'au moins une première couche de vernis est appliquée en une quantité entre 50 et 200 g/m², de manière préférée entre 80 et 150 g/m², de manière préférée entre 100 et 130 g/m².

10. Procédé selon l'une quelconque des revendications précédentes, **caractérisé en ce qu'**au moins une deuxième couche de vernis est appliquée.

11. Procédé selon la revendication 10, **caractérisé en ce que** l'au moins une deuxième couche de vernis est appliquée en une quantité entre 50 et 150 g/m², de manière préférée entre 80 et 120 g/m², de manière préférée entre 100 et 110 g/m².

12. Procédé selon l'une quelconque des revendications 8-11, **caractérisé en ce que** l'au moins une première et/ou au moins une deuxième couche de vernis est durcie en utilisant un émetteur d'électrons.
